Europäisches Patentamt

**European Patent Office**

**Office européen des brevets**

(19)

(11) Veröffentlichungsnummer: **0 182 147**
**B1**

(12) **EUROPÄISCHE PATENTSCHRIFT**

(45) Veröffentlichungstag der Patentschrift:
**18.10.89**

(51) Int. Cl.⁴: **C 08 G 63/52,** C 08 G 63/66,
**C 09 D 3/68**

(21) Anmeldenummer: **85113673.9**

(22) Anmeldetag: **28.10.85**

(54) **Ungesättigte Polyester, Verfahren zu ihrer Herstellung und ihre Verwendung zur Herstellung wässriger Dispersionen.**

(30) Priorität: **10.11.84 DE 3441154**

(43) Veröffentlichungstag der Anmeldung:
**28.05.86 Patentblatt 86/22**

(45) Bekanntmachung des Hinweises auf die Patenterteilung:
**18.10.89 Patentblatt 89/42**

(84) Benannte Vertragsstaaten:
**AT CH DE FR GB IT LI NL SE**

(56) Entgegenhaltungen:
**EP-A- 0 003 337**
**EP-A- 0 014 883**
**EP-A- 0 021 078**
**EP-A- 0 037 463**
**EP-A- 0 154 924**
**BE-A- 570 273**
**FR-A- 1 183 457**

(73) Patentinhaber: **BAYER AG,**
**D-5090 Leverkusen 1 Bayerwerk (DE)**

(72) Erfinder: **Meixner, Jürgen, Dr., Bethelstrasse 18,**
**D-4150 Krefeld 1 (DE)**
Erfinder: **Müller, Manfred, Dipl.-Ing.,**
**Friedrich-Gelsamstrasse 34, D-5140 Erkelenz (DE)**
Erfinder: **Kremer, Wolfgang, Dipl.-Ing., Lilienweg 6,**
**D-4173 Kerken 2 (DE)**

ACTORUM AG

## Beschreibung

Die Erfindung betrifft lufttrocknende $\alpha,\beta$-ethylenisch ungesättigte Polyester, die ohne organische Lösungsmittel und ohne externe Emulgatoren in Wasser dispergiert und ohne copolymerisierbare Monomere gehärtet werden können, ein Verfahren zu ihrer Herstellung und ihre Verwendung zur Herstellung wässriger Dispersionen.

Aus der DE-OS 2 804 216 ($\triangleq$ US-PS 4 281 068) sind wässrige Dispersionen von Gemischen ungesättigter Polyester bekannt, die Allyloxygruppen enthalten und mit Metallsikkativen und Hydroperoxiden gehärtet werden können. 5–50 Gew.-% dieses Gemisches der ungesättigten Polyester bestehen aus einem oder mehreren ungesättigten Polyestern, die einkondensierte Polyalkylenglykole enthalten. Diese Polyester fungieren als einbaubare Emulgatoren. Derartige Systeme besitzen hervorragende lacktechnische Eigenschaften und leiden allein unter dem Nachteil, dass beide Polyester getrennt hergestellt und evtl. auch getrennt gelagert werden müssen. Dieser Nachteil lässt sich nicht etwa dadurch umgehen, dass man die Ausgangsmaterialien, die für beide Polyester gemäss DE-OS 2 804 216 notwendig sind, in einem Eintopfverfahren zu einem Polyester polykondensiert; ein derartiger Polyester lässt sich ohne Hilfsmittel nicht in Wasser dispergieren.

Die neuen Polyester sollten nicht nur gut dispergierbar sein, sondern sich auch zu wasser- und chemikalienbeständigen Überzügen mit guten mechanischen Werten verarbeiten lassen.

Überraschenderweise wurde gefunden, dass Allyloxygruppen enthaltende ungesättigte Polyester bestimmter Zusammensetzung mit einem geringen Gehalt an Polyalkylenglykolresten eines engen Molekulargewichtsbereichs diese Aufgabe erfüllen.

Gegenstand der Erfindung sind ungesättigte Polyester mit Säurezahlen von 5 bis 50 und Viskositäten (bestimmt im Höppler-Kugelfallviskosimeter nach DIN 53 015 bei 20°C) von 5000 bis 30 000 mPa.s enthaltend cokondensierte Reste von

A. 0,5 bis 1, vorzugsweise 0,7 bis 1 Mol mindestens einer $\alpha,\beta$-ethylenisch ungesättigten Dicarbonsäure mit vorzugsweise 4 oder 5 C-Atomen und

B. 0 bis 0,5, vorzugsweise 0 bis 0,3 Mol einer oder mehrerer aliphatischen, gesättigten Dicarbonsäuren mit vorzugsweise 3 bis 10 C-Atomen, einer oder mehrerer cycloaliphatischen, gesättigten oder ungesättigten und/oder aromatischen Dicarbonsäuren mit 8 bis 12 C-Atomen, einer oder mehrerer araliphatischen Dicarbonsäuren mit 9 bis 14 C-Atomen, oder deren Mischungen, wobei sich die Summe der Komponenten A und B jeweils auf 1 Mol ergänzt,

C. mindestens einem zweiwertigen aliphatischen gesättigten Alkohol mit vorzugsweise 2 bis 8 C-Atomen,

D. Trimethylolpropandiallylether,

E. gegebenenfalls einem oder mehreren einwertigen aliphatischen gesättigten, ccycloaliphatischen oder aromatischen Alkoholen mit vorzugsweise 4 bis 16 C-Atomen und

F. mindestens einem Poly-$C_2$-$C_4$-alkylenglykol,

dadurch gekennzeichnet, dass pro Mol A + B die Mengen der Reste der Komponente C 0,4 bis 0,7, vorzugsweise 0,5 bis 0,6 Mol, der Komponente D 0,4 bis 1, vorzugsweise 0,5 bis 1 Mol und der Komponente E 0 bis 0,6, vorzugsweise 0 bis 0,5 Mol betragen mit der Massgabe, dass die Summe der Reste der Komponenten D und E 1 Mol sein soll, dass die cokondensierten Reste der Komponente F ein als Zahlenmittel bestimmtes Molekulargewicht von 1000 bis 2000 besitzen und in einer Menge von 10,5 bis 13,5, vorzugsweise von 11 bis 13 Gew.-%, bezogen auf den ungesättigten Polyester, vorhanden sind.

Bevorzugte ungesättigte Dicarbonsäuren A sind Maleinsäure und insbesondere Fumarsäure.

Bevorzugte Dicarbonsäuren B sind Bernsteinsäure, Adipinsäure, Sebacinsäure, Phthalsäure, Iso- und Terephthalsäure, Hexahydro- und Tetrahydrophthalsäure und Endomethylen-tetrahydrophthalsäure.

Bevorzugte zweiwertige Alkohole C sind Ethylenglykol, Propandiol-1,2; Propandiol-1,3; Butandiol-1,2; Butandiol-1,3; Butnadiol-1,4; Pentandiol-1,3; Hexandiol-1,6 und 2-Ethylhexandiol-1,6.

Bevorzugte einwertige Alkohole E sind n-Butanol, alle Hexanole, Octanole und Decanole, Cetylalkohol, Cyclohexanol, Hexahydrobenzylalkohol, $\beta$-Phenylethanol, vorzugsweise Benzylalkohol.

Bevorzugte Polyalkylenglykole F sind Polyethylenglykole.

Die Herstellung der erfindungsgemässen Polyester kann nach bekannten Methoden, z.B. durch Schmelz- oder Azeotropveresterung der Alkohole und Säuren oder deren veresterungsfähigen Derivate, z.B. ihrer Anhydride, erfolgen, vgl. «Methoden der Organischen Chemie» (Houben-Weyl), 4. Auflage, Band 14/2, Georg Thieme Verlag, Stuttgart 1961, S. 1 bis 5, 21 bis 33, 40 bis 44.

Weiterer Gegenstand der Erfindung ist also ein Verfahren zur Herstellung der neuen Polyester durch Veresterung der Komponenten A bis D, F und gegebenenfalls E unter Inertgasatmosphäre bei Temperaturen von 140 bis 200°C, vorzugsweise 150 bis 180°C.

Um die erfindungsgemässen Polyester vor unerwünschter vorzeitiger Vernetzung zu bewahren, empfiehlt es sich, bereits bei der Herstellung der Polyester 0,001 bis 0,1 Gew.-%, bezogen auf erfindungsgemässen Polyester, Polymerisationsinhibitoren oder Antioxidantien zuzusetzen. Geeignete Stabilisatoren sind in «Methoden der Organischen Chemie» (Houben-Weyl), 4. Auflage, Band 14/1, S. 433 ff, Georg Thieme Verlag, Stuttgart, 1961, beschrieben. Sehr gut geeignet ist z.B. p-Benzochinon in einer Konzentration von 0,01 bis 0,05 Gew.-%, bezogen auf erfindungsgemässen Polyester.

Weiterer Gegenstand der Erfindung ist die Verwendung der neuen Polyester zur Herstellung wässriger Dispersionen.

Die wässrigen Dispersionen können 10 bis 70 Gew.-%, vorzugsweise 30 bis 70 Gew.-%, bezogen auf wässrige Dispersionen, der erfindungsgemässen Polyester enthalten. Die Herstellung der Dispersionen kann durch Einrühren von Wasser, z.B. durch einfaches Rühren oder mittels Dissolver, erfolgen.

Zur Ausbildung einer feinteiligen Dispersion ist portionsweiser Wasserzusatz bei Temperaturen unter 30°C vorteilhaft. Es werden Öl-in-Wasser-Dispersionen gebildet.

Die wässrigen Dispersionen können die zur Erzielung besonderer technischer Effekte notwendigen Komponenten wie Füllstoffe, Pigmente, Farbstoffe, Thixotropiermittel und Glättmittel, Abdeckmittel zur Ausschaltung der Luftinhibierung, Mattierungsmittel und Verlaufmittel in üblichen Mengen enthalten.

Die wässrigen Dispersionen eignen sich hervorragend zur Verarbeitung auf den herkömmlichen mit Giessmaschinen ausgerüsteten Lackierstrassen. Weiter sind sie durch Walzen und Spritzen applizierbar.

Geeignete Substrate sind Papier, Kartonagen, Folien, Leder, Holz, Kunststoffe, Textilien, keramische Materialien oder Metalle.

Die Härtung der Produkte kann mittels energiereicher Strahlung, wie UV-Licht, Elektronen- oder Gammastrahlen sowie durch thermische Polymerisationsinitiatoren, bevorzugt aber durch Härtung mit Metallsikkativen und Hydroperoxiden bei Raumtemperatur erfolgen.

Unter Metallsikkativen werden Eisen-, Blei-, Kobalt- und Mangansalze von Säuren wie Leinölfettsäuren, Tallölfettsäuren, Sojafettsäuren, von Harzsäuren wie Abietinsäure und Naphthensäure oder von Essigsäure oder Isooctansäure verstanden. Bevorzugt werden Kobaltoctoat, Kobaltnapthenat und Kobaltacetat. Die Metallsikkative werden vorzugsweise in Form von wässrigen oder organischen Lösungen in solchen Mengen eingesetzt, dass der Metallgehalt, bezogen auf Polyester, 0,005 bis 1 Gew.-% entspricht.

Als Hydroperoxide seien beispielsweise genannt: tert.-Butylhydroperoxid, Cumolhydroperoxid, 2,5-Dimethylhexan-2,5-hydroperoxid, Cyclohexanonhydroperoxid, Methylethylketonhydroperoxid, Diisopropylbenzol-monohydroperoxid, Wasserstoffperoxid. Vorzugsweise werden die Hydroperoxide in Mengen von 1 bis 10 Gew.-%, bezogen auf Polyester, eingesetzt.

Beispiele

Die Viskositätsmessungen wurde im Höppler-Kugelfallviskosimeter (DIN 53 015) bei 20°C durchgeführt. Die angegebenen Prozentgehalte beziehen sich auf das Gewicht.

In allen Bespielen wurde die Kondensation in Gegenwart von 0,02 Gew.-% Toluhydrochinon durchgeführt.

Die in den nachfolgenden Tabellen aufgeführten Ausgangskomponenten wurden bei 160 bis 180°C unter einem Stickstoffstrom der Schmelzkondensation unterworfen, bis die angegebene Viskosität erreicht war.

Zur Herstellung der Dispersionen wurden je 250 g der erfindungsgemässen Polyester der Beispiele 1 bis 7 mit jeweils 110 g Wasser im Dissolver bei 8000 U/Min 2 Minuten geschert und anschliessend mit Wasser unter Rühren (1000 U/min) auf 50% Festkörpergehalt eingestellt. Es entstanden Öl-in-Wasser-Dispersionen.

Diese Dispersionen wurden mit 2% Kobaltacetatlösung (5% Metallgehalt) und 3% eines 35%igen wässrigen Wasserstoffperoxids versetzt und auf Glasplatten aufgezogen (Nassfilmdicke: 90 μm).

Die Trocknungszeiten bis zur Wischfestigkeit sind in Tabelle 1 aufgeführt.

Alle Lackfilme der Beispiele 1 bis 7 waren nach der Aushärtung kratzfest; die Pendelhärten (nach König, DIN 53 157) nach 24 Stunden lagen über 100 s. Tabelle 2 zeigt Vergleichsprodukte und ihre Kennzahlen, mit denen keine brauchbaren wässrigen Überzugsmittel hergestellt werden konnten.

Der Polyester des Vergleichsbeispiels 8 enthält Reste eines Polyethylenglykols, dessen Molekulargewicht unterhalb 1000, der Polyester des Vergleichsbeispiels 9 Reste eines Polyethylenglykols, dessen Molekulargewicht oberhalb 2000 liegt. Beide Polyester lassen sich ohne Zusatzmittel nicht in Öl-in-Wasser-Dispersionen überführen.

Der Polyester des Vergleichsbeispiels 10 enthält mehr Polyethlyenglykolreste als anspruchsgemäss zulässig ist. Nach Wasserzugabe entstand eine opake Lösung. Daraus hergestellte Lackfilme zeigten nach Aushärtung eine zu geringe Wasserfestigkeit.

Im Polyester des Vergleichsbeispiels 11 wurde der monofunktionelle Alkohol teilweise durch einen difunktionellen Alkohol ersetzt. Nach dem Dispergieren entstand eine feinteilige Dispersion, die sich jedoch nach wenigen Stunden wieder trennte, obwohl das Produkt verhältnismässig viele Polyethylenglykolreste enthielt.

Tabelle 1

| Ausgangskomponenten (Mol) | erfindungsgemässe Beispiele | | | | | | |
|---|---|---|---|---|---|---|---|
| | 1 | 2 | 3 | 4 | 5 | 6 | 7 |
| Maleinsäureanhydrid | 1,0 | – | 1,0 | 1,0 | 1,0 | 0,8 | 1,0 |
| Fumarsäure | – | 1,0 | – | – | – | – | – |
| Tetrahydrophthalsäureanhydrid | – | – | – | – | – | 0,2 | – |
| Polyethylenglykol 1000 | – | – | – | 0,043 | – | – | – |

## Tabelle 1 (Fortsetzung)

| Ausgangskomponenten (Mol) | erfindungsgemässe Beispiele | | | | | | |
|---|---|---|---|---|---|---|---|
| | 1 | 2 | 3 | 4 | 5 | 6 | 7 |
| Polyethylenglykol 1550 | 0,03 | 0,027 | 0,027 | – | – | 0,03 | 0,027 |
| Polyethylenglykol 2000 | – | – | – | – | 0,02 | – | – |
| Propandiol-1,2 | 0,55 | 0,55 | – | 0,53 | 0,56 | 0,55 | 0,55 |
| Ethandiol | – | – | 0,55 | – | – | – | – |
| Trimethylolpropandiallylether | 1,0 | 1,0 | 0,6 | 0,6 | 0,6 | 0,6 | 0,6 |
| Benzylalkohol | – | – | 0,4 | 0,4 | 0,4 | 0,4 | – |
| n-Hexanol | – | – | – | – | – | – | 0,4 |
| Eigenschaften des Polyesters | | | | | | | |
| Polyethylenglykolgehalt (%) | 12,2 | 11,1 | 12,8 | 12,8 | 12,0 | 13,0 | 12,5 |
| Säurezahl | 27 | 23 | 22 | 21 | 27 | 31 | 31 |
| Viskosität (mPa.s) | 16 700 | 14 300 | 14 600 | 15 600 | 15 000 | 14 700 | 14 900 |
| Trocknung bei Raumtemperatur bis Wischfestigkeit (min) | 97 | 65 | 99 | 100 | 100 | 130 | 100 |

## Tabelle 2

| Ausgangskomponenten (Mol) | Vergleichsbeispiele | | | |
|---|---|---|---|---|
| | 8 | 9 | 10 | 11 |
| Maleinsäureanhydrid | 1,0 | 1,0 | 1,0 | 1,0 |
| Polyethylenglykol 600 | 0,075 | – | – | – |
| Polyethylenglykol 1550 | – | – | 0,04 | 0,03 |
| Polyethylenglykol 4000 | – | 0,01 | – | – |
| Propandiol-1,2 | 0,5 | 0,57 | 0,5 | 0,7 |
| Trimethylolpropandiallylether | 0,6 | 0,6 | 1,0 | 0,6 |
| Benzylalkohol | 0,4 | 0,4 | – | – |
| Eigenschaften des Polyesters | | | | |
| Polyethylenglykolgehalt (%) | 13,5 | 12,0 | 15,7 | 15,1 |
| Säurezahl | 19 | 21 | 23 | 44 |
| Viskosität (mPa.s) | 14 300 | 14 800 | 15 200 | 15 700 |

## Patentansprüche

1. Ungesättigte Polyester mit Säurezahlen von 5 bis 50 und Viskositäten (bestimmt im Höppler-Kugelfallviskosimeter nach DIN 53 015 bei 20°C) von 5000 bis 30 000 mPa.s enthaltend cokondensierte Reste von

A. 0,5 bis 1 Mol mindestens einer α,β-ethylenisch ungesättigten Dicarbonsäure mit vorzugsweise 4 oder 5 C-Atomen und

B. 0 bis 0,5 Mol einer oder mehrerer aliphatischen, gesättigten Dicarbonsäuren mit vorzugsweise 3 bis 10 C-Atomen, einer oder mehrerer cycloaliphatischen, gesättigten oder ungesättigten und/oder aromatischen Dicarbonsäuren mit 8 bis 12 C-Atomen, einer oder mehrerer araliphatischen Dicarbonsäuren mit 9 bis 14 C-Atomen, oder deren Mischungen, wobei sich die Summe der Komponenten A und B jeweils auf 1 Mol ergänzt,

C. mindestens einem zweiwertigen aliphatischen gesättigten Alkohol mit vorzugsweise 2 bis 8 C-Atomen,

D. Trimethylolpropandiallylether,

E. gegebenenfalls einem oder mehreren einwertigen aliphatischen gesättigten, cycloaliphatischen oder aromatischen Alkoholen mit vorzugsweise 4 bis 16 C-Atomen und

F. mindestens einem Poly-C₂-C₄-alkylenglykol, dadurch gekennzeichnet, dass pro Mol A + B die Mengen der Reste der Komponente C 0,4 bis 0,7 Mol, der Komponente D 0,4 bis 1 Mol und der Komponente E 0 bis 0,6 Mol betragen mit der Massgabe, dass die Summe der Reste der Komponenten D und E 1 Mol sein soll, dass die cokondensierten Reste der Komponente F ein als Zahlenmittel bestimmtes Molekulargewicht von 1000 bis 2000 besitzen und in einer Menge von 10,5 bis 13,5 Gew.-%, bezogen auf den ungesättigten Polyester, vorhanden sind.

2. Polyester nach Anspruch 1, dadurch gekennzeichnet, dass sie 0,7 bis 1 Mol Reste A und 0 bis 0,3 Mol Reste B enthalten.

3. Polyester nach Ansprüchen 1 und 2, dadurch gekennzeichnet, dass die Menge der cokondensierten Reste der Komponente C 0,5 bis 0,6 Mol beträgt.

4. Polyester nach Ansprüchen 1 bis 3, dadurch gekennzeichnet, dass die Menge der cokondensierten Reste der Komponente D 0,5 bis 1 Mol beträgt.

5. Polyester nach Ansprüchen 1 bis 4, dadurch gekennzeichnet, dass die Menge der cokondensierten Reste der Komponente E 0 bis 0,5 Mol beträgt.

6. Polyester nach Ansprüchen 1 bis 5, dadurch gekennzeichnet, dass die cokondensierten Reste der Komponente F in einer Menge von 11 bis 13 Gew.-%, bezogen auf ungesättigten Polyester, vorhanden sind.

7. Verfahren zur Herstellung der Polyester nach Ansprüchen 1 bis 6, durch Veresterung der Komponenten A bis D, F und gegebenenfalls E unter Inertgasatmosphäre bei Temperaturen von 140 bis 200°C.

8. Verwendung der Polyester nach Ansprüchen 1 bis 6 zur Herstellung wässriger Dispersionen.

## Claims

1. Unsaturated polyesters having acid values of from 5 to 50 and viscosities (as determined in a Höppler falling-ball viscosimeter in accordance with DIN 53 015 at 20°C) in the range from 5000 to 30000 mPa.s containing co-condensed residues of

A. 0.5 to 1 mol of at least one $\alpha,\beta$-ethylenically unsaturated dicarboxylic acid preferably containing 4 or 5 carbon atoms and

B. 0 to 0.5 mol of one or more aliphatic, unsaturated dicarboxylic acids preferably containing 3 to 10 carbon atoms, one or more cycloaliphatic, saturated or unsaturated and/or aromatic dicarboxylic acids containing 8 to 12 carbon atoms, one or more araliphatic dicarboxylic acids containing 9 to 14 carbon atoms or mixtures thereof, the sum of components A and B being 1 mol,

C. at least one dihydric aliphatic saturated alcohol preferably containing 2 to 8 carbon atoms,

D. trimethylol propane diallyl ether,

E. optionally one or more monohydric, aliphatic, saturated, cycloaliphatic or aromatic alcohols preferably containing 4 to 16 carbon atoms and F. at least one poly-$C_2$-$C_4$-alkylene glycol, characterized in that, per mol A + B, the quantities of the residues of component C are from 0.4 to 0.7 mol, of component D from 0.4 to 1 mol and, of component E, from 0 to 0.6 mol, with the proviso that the sum of the residues of components D and E should be 1 mol, in that the co-condensed residues of component F have a number average molecular weight of from 1000 to 2000 and are present in a quantity of from 10.5 to 13.5% by weight.

2. Polyesters as claimed in claim 1, characterized in that they contain from 0.7 to 1 mol residues A and from 0 to 0.3 mol residues B.

3. Polyesters as claimed in claims 1 and 2, characterized in that the quantity of the co-condensed residues of component C is from 0.5 to 0.6 mol.

4. Polyesters as claimed in claims 1 to 3, characterized in that the quantity of co-condensed residues of component D is from 0.5 to 1 mol.

5. Polyesters as claimed in claims 1 to 4, characterized in the quantity of co-condensed residues of component E is from 0 to 0.5 mol.

6. Polyesters as claimed in claims 1 to 5, characterized in that the co-condensed residues of component F are present in a quantity of from 11 to 13% by weight, based on unsaturated polyesters.

7. A process for the production of the polyesters claimed in claims 1 to 6 by esterification of components A to D, F and, optionally, E in an inert gas atmosphere at temperatures in the range from 140 to 200°C.

8. The use of the polyesters claimed in claims 1 to 6 for the production of aqueous dispersions.

## Revendications

1. Polyesters insaturés, présentant des indices d'acide allant de 5 à 50 et ayant des viscosités (déterminées dans un viscosimètre Höppler à chute de bille, selon la norme DIN 53 015 à 20°C) comprises entre 5000 et 30000 mPa.s, contenant des restes cocondensés de:

A. 0,5 à 1 mol d'au moins un acide dicarboxylique à insaturation éthylénique en $\alpha,\beta$, ayant avantageusement 4 ou 5 atomes de carbone, et

B. 0 à 0,5 mol d'un ou plusieurs acides dicarboxyliques aliphatiques saturés ayant de préférence 3 à 10 atomes de carbone, un ou plusieurs acides dicarboxyliques cycloaliphatiques, saturés ou insaturés et/ou aromatiques, ayant 8 à 12 atomes de carbone, un ou plusieurs acides dicarboxyliques araliphatiques ayant 9 à 14 atomes des carbone, ou leurs mélanges, la somme des composants A et B formant toujours 1 mol,

C. au moins un alcool divalent (dialcool) aliphatique saturé ayant de préférence 2 à 8 atomes de carbone,

D. l'éther-oxyde diallylique de triméthylolpropane,

E. éventuellement un ou plusieurs alcools monovalents (monoalcools) aliphatiques saturés, cycloaliphatiques ou aromatiques ayant de préférence 4 à 16 atomes de carbone, et

F. au moins un polyalkylène (en $C_2$ à $C_4$)glycol, polyesters caractérisés en ce que, par mol de (A + B), les quantités des restes du composant C représentent 0,4 à 0,7 mol, du composant D 0,4 à 1 mol et du composant E 0 à 0,6 mol, à la condition que la somme des restes de composants D et E forme 1 mol, que les restes cocondensés du composant F possèdent un poids moléculaire, déterminé par moyenne en nombre, de 1000 à 2000 et soient présents en une quantité de 10,5 à 13,5% en poids, sur la base des polyesters insaturés.

2. Polyesters selon la revendication 1, caractérisés en ce qu'ils contiennent 0,7 à 1 mol des restes A et 0 à 0,3 mol des restes B.

3. Polyesters selon les revendications 1 et 2, caractérisés en ce que la quantité des restes cocondensés du composant C représente 0,5 à 0,6 mol.

4. Polyesters selon les revendications 1 à 3, caractérisés en ce que la quantité des restes cocondensés du composant D représente 0,5 à 1 mol.

5. Polyesters selon les revendications 1 à 4, caractérisés en ce que la quantité des restes cocondensés du composant E représente 0 à 0,5 mol.

6. Polyesters selon les revendications 1 à 5, caractérisés en ce que les restes cocondensés du composant F sont présents en une quantité de 11 à 13% en poids, sur la base des polyesters insaturés.

7. Procédé pour préparer des polyesters selon les revendications 1 à 6, par estérification des composants A à D, F éventuellement E, sous atmosphère de gaz inerte, en opérant à des températures de 140 à 200°C.

8. Utilisation des polyesters selon les revendications 1 à 6 pour préparer des dispersions aqueuses.